# EUROPÄISCHE PATENTANMELDUNG

(11) **EP 1 217 624 A2**
(43) Veröffentlichungstag der Anmeldung: **26.06.2002**
(21) Anmeldenummer: 01126099.9
(22) Anmeldetag: 02.11.2001
(51) Int. Cl.: G11B 23/04, G11B 23/107, G11B 23/023

(54) **Transportsicherungselement für Datenkassetten, Datenspeicherkassettenstapel mit Transportsicherungselementen sowie Verfahren dazu**

(30) Priorität: 13.12.2000 DE 20021132 U
(71) Anmelder: EMTEC Magnetics GmbH, 67059 Ludwigshafen (DE)
(72) Erfinder: Schoettle, Klaus, 67000 Strasbourg (DE); Gergely, Istvan, Dr., 77746 Schutterwald (DE)

(57) **Zusammenfassung**

Beschrieben sind Transportsicherungselemente für Datenspeicherkassetten, Datenspeicherkassettenstapel mit Transportsicherungelementen und Verfahren zur Transportsicherung, wobei das Transportsicherungselemente unter Überwindung der Federkraft der Spulenbremse in die Zugangsöffnung des Gehäuseunterteils einer Datenspeicherkassette einlegbar sind und dabei die Bandspule gegen die Innenseite des Gehäusedeckels gedrückt und somit eine Beschädigung der Spulenflansche während des Transports vermieden wird. Durch Umhüllung der Datenspeicherkassette oder des Datenspeicherkassettenstapels bleiben die Bandspule in ihrer Lage solange fixiert, bis die Umhüllung entfernt wird und dabei die Transportsicherungselemente unter der Einwirkung der Federkraft der Spulenbremse selbsttätig aus den Zugangsöffnungen gedrückt werden und die Datenspeicherkassetten einsatzbereit sind.

## Beschreibung

Die Erfindung betrifft ein Transportsicherungselement für Datenspeicherkassetten, insbesondere Kassetten mit bandförmigem Datenaufzeichnungsträger.
Die Erfindung betrifft außerdem einen Datenspeicherkassettenstapel mit Transportsicherungselementen sowie ein Verfahren dazu.

Kassetten dieser Art sind beispielsweise unter den Namen MTC, DLT und Ultrium bekannt und bestehen aus wenigstens
- einem Kassettengehäuse, gebildet aus einer oberen Gehäusehälfte mit Deckel und Seitenwänden und einer unteren Gehäusehälfte mit Boden und Seitenwänden, wobei der Boden mindestens eine kreisförmige Zugangsöffnung enthält und die beiden Gehäusehälften miteinander lösbar oder unlösbar verbunden sind
- einer im Kassettengehäuse rotierbar gelagerten, einseitig federbelasteten Bandspule, bestehend aus unterem und oberem Spulenflansch und einer Nabe, mit darauf aufgewickeltem bandförmigem Datenaufzeichnungsträger, an dessen freiem Ende ein Bandführungselement (nicht dargestellt) angebracht ist, mit dessen Hilfe das Magnetband zur Aufwickelspule geführt und auf dieser aufgewickelt wird und wobei der in die Zugangsöffnung ragende Teil der Bandspulennabe Mittel zur Koppelung der Bandspule mit der geräteseitigen Antriebsnabe aufweist und
- einer Spulenbremse, welche die Bandspule gegen Verdrehen sichert, wenn die geräteseitige Antriebsnabe nicht in Eingriff ist.

Unter den Mitteln zur Koppelung zwischen Bandspule und geräteseitiger Antriebsnabe sind beispielsweise Antriebsverzahnungen, die im allgemeinen im Randbereich der Stirnseite der Bandspulennabe angebracht sind und in die Stirnseite selbst eingelassene scheibenförmige Metallplatten zu verstehen, wobei diese in ihrer Mitte auch einen kreisringförmigen Durchbruch, der zum Zentrieren der Bandspule auf der geräteseitigen Antriebsnabe und auch zum Lösen der Bremsverzahnung dient, aufweisen kann.

Unter Spulenbremsen sind dem Fachmann verschiedene Ausführungen bekannt, wobei in der Beschreibung und in den Zeichnungen exemplarisch die aus der MTC- oder Magstar-Kassette bekannte Spulenbremse, bestehend aus Bremsteil und Feder, dargestellt ist.

Die Bandspule nimmt innerhalb des Kassettengehäuses normalerweise zwei Lagen oder Positionen ein. Die erste Endlage oder Ruheposition der Bandspule ist erreicht, wenn sich die Kassette außerhalb des Laufwerks befindet. Hierbei liegt die Bandspule bzw. ihr unterer Spulenflansch durch die auf die Bandspule einseitig wirkende Federkraft an der Innenseite des Gehäusebodens an. Wird die Kassette in das Laufwerk eingelegt, so wird durch die Antriebsnabe des Laufwerks die Spulenbremse gelöst und die Bandspule wird unter Überwindung der Federkraft von der Innenseite des Gehäusebodens aus ihrer ersten Endlage in ihre zweite Lage, die Betriebslage, angehoben.

Während des bestimmungsgemäßen Gebrauchs der Kassette im Laufwerk wirken normalerweise keine Kräfte auf die Kassette ein, die zu Beschädigungen der Bandspule oder des darauf aufgewickelten bandförmigen Datenaufzeichnungsträgers führen.

Anders jedoch verhält es sich, wenn sich die Kassette außerhalb des Laufwerks befindet, insbesondere dann, wenn die Kassette vom Hersteller oder Händler zum Endverbraucher transportiert wird. Die hierbei durch Erschütterungen und unsachgemäße Handhabung auftretenden Kräfte können so groß sein, dass die durch die Feder der Spulenbremse auf die Bandspule ausgeübte Kraft überwunden wird und die Bandspule innerhalb des Gehäuses aus ihrer Ruheposition bewegt wird. Dabei ist es möglich, dass die Bandspule um ihre Rotationsachse kippt und die Flansche der Bandspule an der Innenseite von Gehäusedeckel und/oder Gehäuseboden anschlagen. Hierbei werden fast ausnahmslos die relativ dünnen Flansche der Bandspule derart verformt, dass sich die lichte Weite zwischen den Flanschen in dem Bereich, der nicht mit Band bewickelt ist, verändert und somit die Bandkanten des Datenaufzeichnungsträgers beschädigt werden. Im Zuge immer größer werdender Speicherkapazitäten werden auch die bandförmigen Datenaufzeichnungsträger immer dünner und somit auch gegen Beschädigung immer empfindlicher. Im Extremfall hat dies zur Folge, dass die Randspuren oder Servospuren nicht mehr gelesen werden können und die Kassette somit unbrauchbar ist.

US 5,826,811 beschreibt als Spulensicherungselement einen im wesentlichen kappenförmigen Stöpsel aus Kunststoff an dessen äußerem Umfang federnde Nasen angebracht sind. Dieser Stöpsel wird in die Zugangsöffnung des Gehäuseunterteils eingeschoben, wobei die Bandspule gegen das Gehäuseoberteil gedrückt wird, die Nasen des Stöpsels verrasten mit einer kreisringförmigen Erhebung, die auf der der Zugangsöffnung angrenzenden Innenseite des Gehäuseunterteils angebracht ist und fixieren somit die Bandspule. Mittels einer in den Stöpsel eingelassenen Lasche oder eines Griffs ist der Stöpsel wieder zu entfernen und die Kassette ist zum Gebrauch im Laufwerk bereit.

Nachteilig an dieser Anordnung ist jedoch, dass beim Verrasten der Nasen mit dem Gehäuseunterteil Dropout verursachender Abrieb entsteht, der für hochwertige Datenspeichersysteme nicht tragbar ist. Außerdem ist das Entfernen des Stöpsels von Hand umständlich, so dass ein geeignetes Werkzeug benutzt werden muß.

Der vorliegenden Erfindung lagen daher die Aufgaben zugrunde
a) ein Transportsicherungselement zu finden, das bei Einlegen in das Kassettengehäuse sowie beim Herausnehmen keinen Abrieb verursacht und ohne Hilfswerkzeuge entfernbar ist, bzw selbsttätig aus der Zugangsöffnung gleitet.
b) einen Datenspeicherkassettenstapel unter Verwendung des Transportsicherungselements bereitzustellen.
c) ein Verfahren zur Transportsicherung eines Datenspeicherkassettenstapels bereitzustellen, wobei das Transportsicherungselement nach Entfernen der Umhüllung des Stapels selbsttätig aus der Kassette gleitet.

Die Aufgabe a)
wurde gelöst mit einem Transportsicherungselement gemäß den Merkmalen der Ansprüche 1 bis 7.

Die Aufgabe b)
wurde gelöst mit einen Datenspeicherkassettenstapel gemäß den Merkmalen der Ansprüche 8 und 9

Die Aufgabe c)
wurde gelöst mit einem Verfahren gemäß den Merkmalen des Anspruchs 10.

Weitere Einzelheiten der Erfindung gehen aus den Unteransprüchen, der Beschreibung und den Zeichnungen hervor.

Im folgenden wird die Erfindung unter Bezugnahme auf die Zeichnungen näher erläutert, dabei zeigt
- Fig. 1a:: einen Schnitt durch eine schematisch dargestellte Datentspeicherkassette, wobei sich die Bandspule in ihrer unteren Lage befindet und eine Darstellung einer ersten Ausführung des erfindungsgemäßen Transportsicherungselements.
- Fig.1b:: einen Schnitt durch eine Datenspeicherkassette, gemäß Fig. 1a mit eingelegtem Transportsicherungselement.
- Fig. 2a:: einen Schnitt durch eine schematisch dargestellte Datenspeicherkassette, wobei sich die Bandspule in ihrer unteren Lage befindet und eine Darstellung einer zweiten Ausführung des erfindungsgemäßen Transportsicherungselements.
- Fig.2b:: einen Schnitt durch eine Datenspeicherkassette, gemäß Fig. 2a mit eingelegtem Transportsicherungselement.
- Fig. 3a:: einen Schnitt durch eine schematisch dargestellte Datenspeicherkassette, wobei sich die Bandspule in ihrer unteren Lage befindet und eine Darstellung einer dritten Ausführung des erfindungsgemäßen Transportsicherungselements.
- Fig.3b:: einen Schnitt durch eine Datenspeicherkassette, gemäß Fig. 3a mit eingelegtem Transportsicherungselement.
- Fig. 4a:: einen Schnitt durch eine schematisch dargestellte Datenspeicherkassette, wobei sich die Bandspule in ihrer unteren Lage befindet und eine Darstellung einer vierten Ausführung des erfindungsgemäßen Transportsicherungselements.
- Fig.4b:: einen Schnitt durch eine Datenspeicherkassette, gemäß Fig. 4a mit eingelegtem Transportsicherungselement.
- Fig. 5a bis Fig. 5c:: isometrische Darstellungen weiterer Ausführungsformen erfindungsgemäßer Transportsicherungselemente.
- Fig. 6:: einen Datenspeicherkassettenstapel mit eingelegten erfindungsgemäßen Transportsicherungselementen 3a (3b, 3c).
- Fig. 7:: einen Datenspeicherkassettenstapel mit eingelegten erfindungsgemäßen Transportischerungselementen 3x (3y, 3z).
- Fig. 8:: erfindungsgemäße Transportsicherungselemente zur Verwendung in einem Datenspeicherkassettenstapel gemäß Fig. 6.

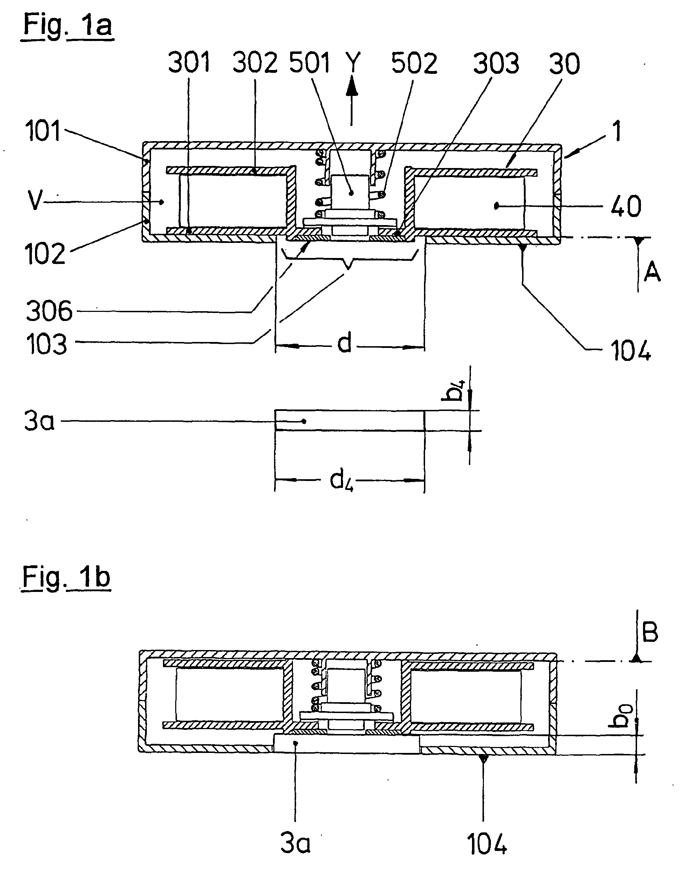

Eine erste erfindungsgemäße Ausführung eines in die kreisförmige Zugangsöffnung (103) des Gehäuseunterteils (102) einlegbaren Transportsicherungselements (3a) ist in Fig. 1a und Fig. 1b dargestellt und ist unabhängig von den konstruktiven Details der Stirnseite (306) der Bandspulennabe (303) einsetzbar.

Das Transportsicherungselement (3a) ist im wesentlichen scheibenförmig und weist einen Außendurchmesser (d₄) auf, welcher geringfügig kleiner ist als der Durchmesser (d) der kreisförmigen Zugangsöffnung (103) in der unteren Gehäusehälfte (102), so dass das Transportsicherungselement (3a) in die kreisförmige Zugangsöffnung (103) leicht einlegbar ist und wobei die Dicke (b₄) des Transportsicherungselements (3a) im wesentlichen gleich ist dem Abstand (b₀) der Stirnseite der durch die Zugangsöffnung (103) ragenden Bandspulennabe (303) durch die in der oberen Anschlagposition (B) des oberen Spulenflansches (302) der Spule (30) an der oberen Gehäusehälfte (101) im Innenraum (V) der Kassette und der dem Innenraum (V) abgewandten äußeren Oberfläche (104) der unteren Gehäusehälfte (102).

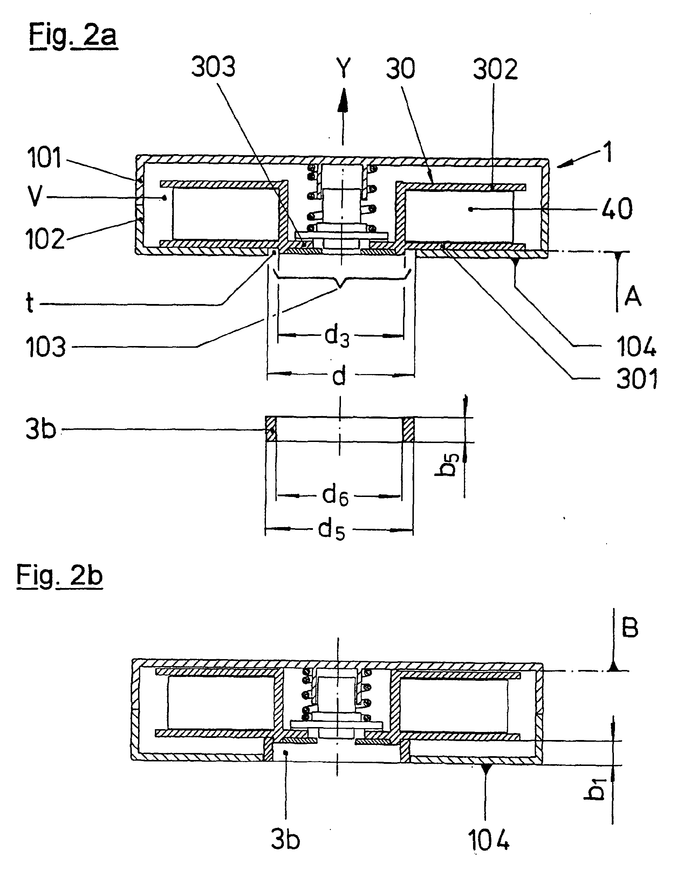

Eine andere erfindungsgemäße Ausführung eines in die kreisförmige Zugangsöffnung (103) des Gehäuseunterteils (102) einlegbaren Transportsicherungselements (3b) zeigt Fig. 2a und Fig. 2b.

Diese Ausführungsform ist vorteilhaft anwendbar, wenn der Durchmesser (d₃) des Teils der Bandspulennabe (303), der in die Zugangsöffnung (103) ragt, wesentlich geringer ist als der Durchmesser (d) der Zugangsöffnung (103) so daß zwischen der äußeren Mantelfläche des in die Öffnung (103) ragenden Teils der Bandspulennabe (303) und der inneren Mantelfläche der Zugangsöffnung (103) eine ringförmige Ausnehmung (t) entsteht.

Das Transportsicherungselement (3b) ist im wesentlichen hohlzylindrisch ausgebildet, wobei der Außendurchmesser (d₅) geringfügig kleiner ist als der Durchmesser (d) der kreisförmigen Zugangsöffnung (103) in der unteren Gehäusehälfte (102) und der Innendurchmesser (d₆) geringfügig größer ist als der Durchmesser (d₃) des unteren Spulenflansches (301), so dass das Transportsicherungselement (3b) in die ringförmige Ausnehmung (t) leicht einlegbar ist. Die Ringdicke (b₅) ist im wesentlichen gegeben durch den Abstand (b₁) des unteren Spulenflansches (301) in der oberen Anschlagposition (B) der Bandspule (30) an der oberen Gehäusehälfte (101) im Innenraum (V) und der dem Innenraum (V) abgewandten äußeren Oberfläche (104) der unteren Gehäusehälfte (102).

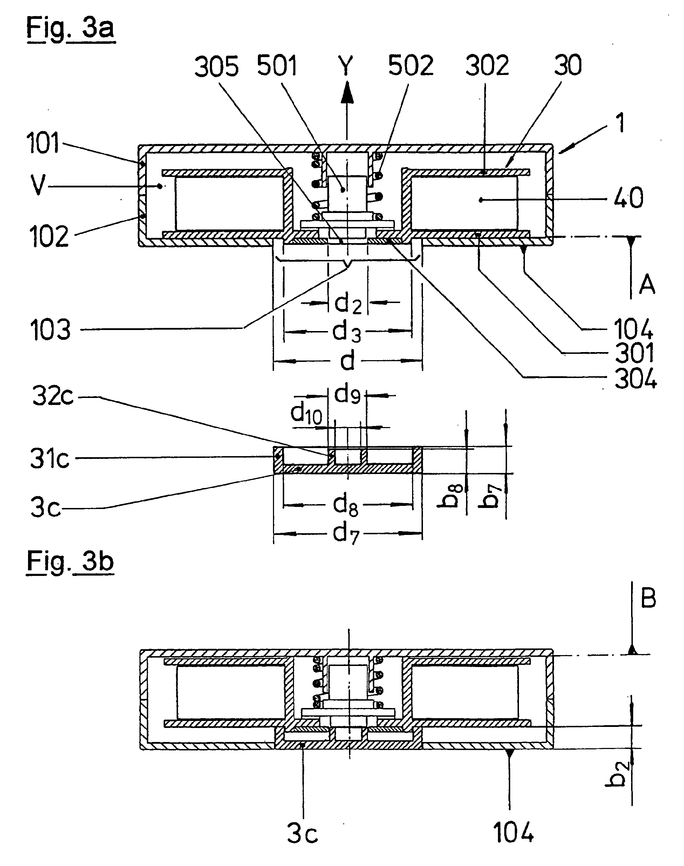

Eine weitere erfindungsgemäße Ausführung eines in die kreisförmige Zugangsöffnung (103) des Gehäuseunterteils (102) einlegbaren Transportsicherungselements (3c) ist in Fig. 3a und 3b dargestellt.

Das Transportsicherungselement (3c) ist im wesentlichen scheibenförmig und weist an der der Metallplatte (304) zugewandten Seite kreisringförmige Erhebungen (31c, 32c) auf. Der Außendurchmesser (d₇) der am Rand befindlichen kreisringförmigen Erhebung (31c) ist hierbei geringfügig kleiner als der Durchmesser (d) der kreisförmigen Zugangsöffnung (103) des Gehäuseunterteils (102) und der Innendurchmesser (d₈) ist geringfügig größer als der Durchmesser (d₃) der in die Zugangsöffnung (103) ragenden Bandspulennabe (303). Der Außendurchmesser (d₉) der in Richtung Scheibenzentrum befindlichen kreisringförmigen Erhebung (32c) ist geringfügig kleiner als der Durchmesser (d₂) des konzentrischen Durchbruchs (305) der Metallplatte (304), während der Innendurchmesser (d₁₀) innerhalb fertigungstechnischer Grenzen frei wählbar ist. Die Ringdicke (b₇) ist im wesentlichen gegeben durch den Abstand (b₂) des unteren Spulenflansches (301) in der oberen Anschlagposition (B) der Bandspule (30) an der oberen Gehäusehälfte (101) im Innenraum (V) und der dem Innenraum (V) abgewandten äußeren Oberfläche (104) der unteren Gehäusehälfte (102). Die Dicke (b₈) des Transportsicherungselements (3c) ist so bemessen, dass die kreisringförmige Erhebung (32c) des Transportsicherungselements (3c) die Spulenbremse nicht lösen kann.

Diese Ausführungsform bietet den Vorteil, dass die radiale Beweglichkeit der Bandspule (30) während des Transports eingeengt ist, wenn an den Durchmessern (d₂ und d) zentriert wird, da die Toleranz des Durchmessers (d₂) wesentlich geringer ist als die Toleranz des Durchmessers (d₃). Dementsprechend eng ist also der Durchmesser (d₉) tolerierbar.

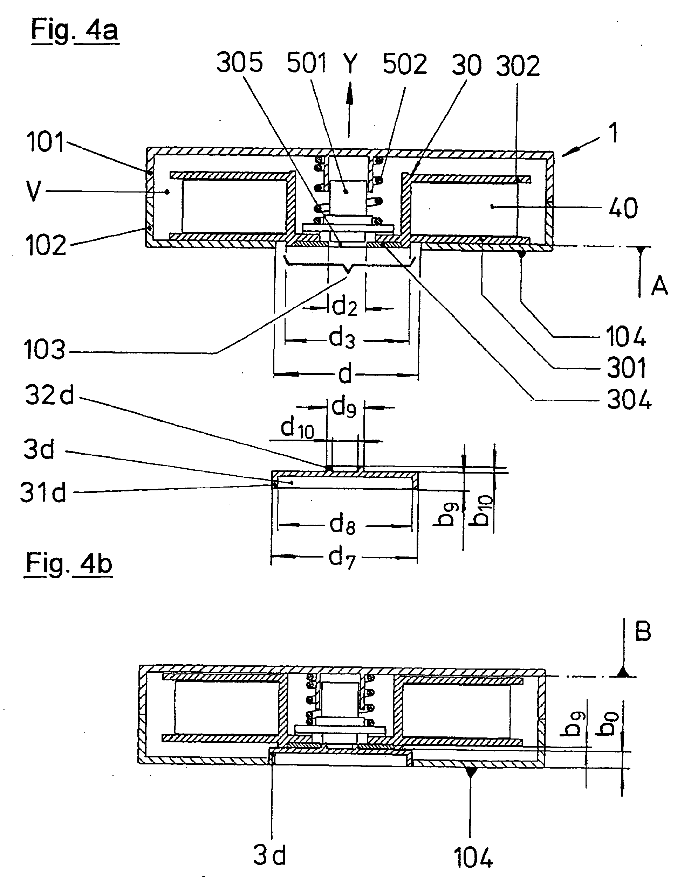

Eine Abwandlung der zuvor beschriebenen Ausführungsform ist in Fig. 4a und Fig. 4b dargestellt, wobei eine kreis- bzw. kreisringförmige Erhebungen (32d) auf der einen Stirnfläche im Scheibenzentrum des im wesentlichen scheibenförmigen Transportsicherungselements (3d) angebracht ist und eine kreisringförmige Erhebung (31d) auf der gegenüberliegenden Stirnfläche am Scheibenumfang. Die Durchmesser (d₇, d₈, d₉ und d₁₀) des Transportsicherungselements (3d) sind identisch mit der in Fig. 3a dargestellten Ausführung, während die Dicke (b₉) identisch ist mit der Dicke (b₄) der in Fig. 1a dargestellten Ausführung. Die Dicke (b₁₀) des Transportsicherungselements (3d) ist abhängig von den Abmessungen der Spulenbremse und ist so gewählt, dass die Spulenbremse, bzw. das Bremsteil (501) nicht angehoben wird.

Anstelle der kreisringförmigen Erhebungen (32d) kann auch eine kreisförmige Erhebung (nicht dargestellt) ausgeführt sein.

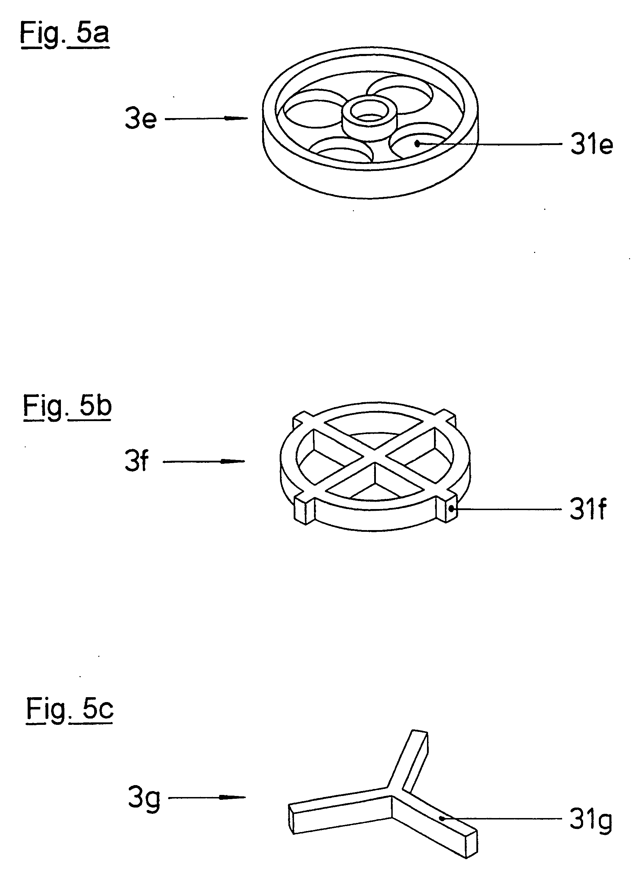

Die in Fig. 1a, Fig. 2a, Fig. 3a und Fig. 4a gezeigten und zuvor beschriebenen Transportsicherungselemente sind Grundformen und sind entsprechend fertigungstechnischer Anforderungen sowie gestaltungsmäßig beliebig variierbar. So ist beispielhaft in Fig. 5a ein Transportsicherungselement (3e) dargestellt, das in der Grundform dem Transportsicherungselement (3c) entspricht, wobei zur Materialeinsparung kreisförmige Ausnehmungen (31e) angebracht sind. Fig. 5b und Fig. 5c zeigen weitere materialoptimierte Varianten eines Transportsicherungselements (3a), wobei die Transportsicherungselemente (3f, 3g) mittels der Vorsprünge (31f) bzw. der Schenkelenden (31g) in der kreisförmigen Zugangsöffnung (103) des unteren Gehäuseteils (102) zentriert sind.

Aus logistischen Gründen ist es generell wünschenswert den Endverbraucher nicht nur mit Einzelkassetten sondern auch mit größeren Verpackungseinheiten, die mehrere Datenspeicherkassetten umfassen, wobei die erfindungsgemäßen Transportsicherungen zur Anwendung kommen, zu versorgen.

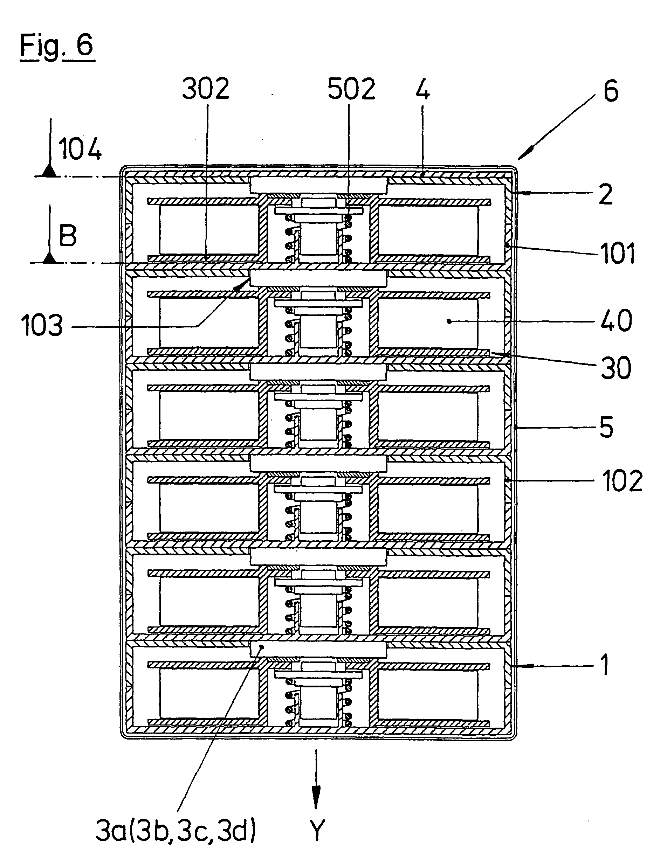

Eine erste Ausführung eines erfindungsgemäßen Datenspeicherkassettenstapels (6) bzw. einer Verpackungseinheit ist in Fig. 6 dargestellt. Er besteht aus mindestens zwei Datenspeicherkassetten (1, 2), ebenso vielen in die kreisförmigen Zugangsöffnungen (103) eingelegten Transportsicherungselementen ((3a, (3b, 3c, 3d)), einer ebenen Deckplatte (4) und einer Umhüllung (5). Wie aus der Zeichnung ersichtlich, sind die Datenspeicherkassetten gleichgerichtet übereinander gestapelt, wobei hier die im Gehäuseunterteil (102) angebrachten Zugangsöffnungen (103) entgegen der axialen Richtung (Y) weisen. Es ist aber genauso möglich den Stapel so zu legen, dass die Zugangsöffnungen (103) in die axiale Richtung (Y) weisen (nicht dargestellt). In beiden Fällen liegt die ebene Deckplatte (4) an der äußeren Oberfläche (104) der unteren Gehäusehälfte (102) einer endständigen Datenspeichekassette (2) an. Als endständige Datenspeicherkassette (2) ist diejenige Kassette definiert, deren Zugangsöffnung (103) nicht durch eine angrenzende Datenspeicherkassette abgedeckt ist. Als Umhüllungsmedium sind alle handelsüblichen Verpackungsfolien, wie beispielsweise Schrumpffolien oder auch Kartonagen, deren Abmessungen auf den Kassettenstapel abgestimmt sind, verwendbar.
Selbstverständlich ist die zuvor beschriebene Verpackung auch auf eine einzelne Datenspeicherkassette anwendbar.

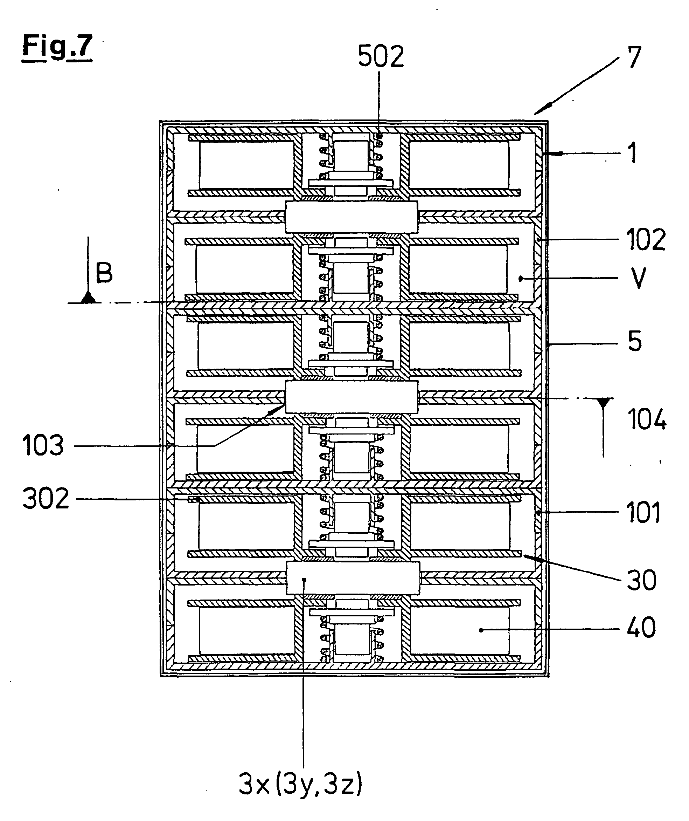

Eine weitere Ausführung eines erfindungsgemäßen Datenspeicherkassettenstapels (7), bzw. einer Verpackung ist in Fig. 7 dargestellt. Er besteht aus mindestens zwei Datenspeicherkassetten (1) und halb so vielen in die kreisförmigen Zugangsöffnungen (103) eingelegten Transportsicherungselementen ((3x), 3y, 3z)) und einer Umhüllung (5). Wie aus der Zeichnung ersichtlich, sind jeweils zwei Datenspeicherkassetten (1) zu einem Doppelpack so zusammengefügt, dass ihre Zugangsöffnungen (103) einander zugewandt sind und somit jeweils ein Transportsicherungselement (3x, 3y, 3z) die Bandspulen (30) von zwei Datenspeicherkassetten (1) sichert. Durch diese Anordnung der Datenspeicherkassetten ist die ebene Deckplatte (4) entbehrlich. Mehrere solcher Doppelpacks sind übereinander stapelbar.

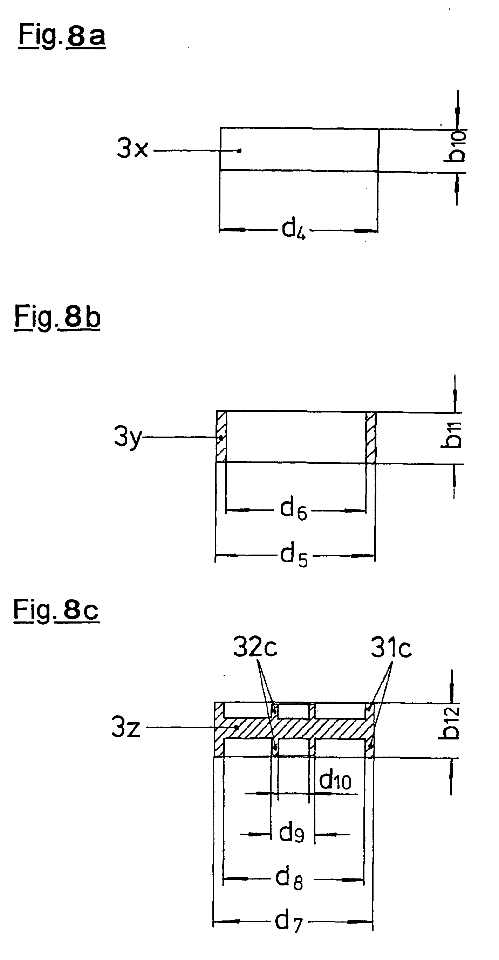

Die bei dieser Ausführung verwendeten Transportsicherungselemente (3x, 3y, 3z) sind in Fig. 8a. bis Fig. 8c dargestellt.
Wie ohne weiteres ersichtlich, unterscheiden sich die Transportsicherungselemente (3x, 3y) von den in Fig. 1a und Fig. 2a dargestellten Transportsicherungselementen (3a, 3b) nur durch ihre Höhe, wobei die Höhe b₁₀ = 2 x b₄ und die Höhe b₁₁ = 2 x b₅.
Das in Fig. 8c dargestellte Transportsicherungselement (3z) entspricht zwei rückseitig aneinander gefügten Transportsicherungselementen (3c) so dass beide Stirnseiten des Transportsicherungselements (3z) die kreisringförmigen Erhebungen (31 c ,32c) aufweisen und wobei die Höhe b₁₂ = 2 x b₇.

Wie für den Fachmann ersichtlich ist auch das in Fig. 4a dargestellte Transportsicherungselement (3d) leicht so modifizierbar, dass es der Funktion der in Fig. 8a - 8c gezeigten Transportsicherungselementen genügt.

Nachfolgend ist ein erstes Verfahren zur Transportsicherung eines Datenspeicherkassettenstapels beschrieben.

Der Datenspeicherkassettenstapel (6) besteht wie in Fig. 6 dargestellt aus mehreren, mindestens jedoch zwei Datenspeicherkassetten, ebenso vielen Transportsicherungselementen (3a, 3b, 3c, 3d), einer ebenen Deckplatte (4) und einem Umhüllungsmedium (5). Eine erste Datenspeicherkassette (1) mit einem in die Zugangsöffnung (103) eingelegten Transportsicherungselement (3a, 3b, 3c, 3d) wird so in eine Stapelhilfe (nicht dargestellt) abgelegt, dass die im Gehäuseunterteil (102) angebrachte Zugangsöffnung (103) entgegen der axialen Richtung (Y), also nach oben weist. Auf die so abgelegte Kassette werden sodann weiter Kassetten mit eingelegtem Transportsicherungselement (3a, 3b, 3c, 3d) gleichgerichtet gestapelt, das heißt so übereinander gelegt, dass die mit einem Transportsicherungselement (3a, 3b, 3c, 3d) versehene Zugangsöffnung (103) der zuvor abgelegten Kassette durch das Gehäuseoberteil der nachfolgend abgelegten Kassette abgedeckt wird. Dieser Vorgang wird so oft wiederholt, bis die gewünschte Anzahl von Datenspeicherkassetten erreicht ist. Auf die endständige Datenspeicherkassette (2), die ebenfalls mit einem Transportsicherungselement (3a, 3b, 3c, 3d) versehen ist, wird die ebene Deckplatte (4) aufgelegt. Als endständige Datenspeicherkassette (2) ist diejenige Kassette definiert, deren Zugangsöffnung (103) nicht durch eine angrenzende Datenspeicherkassette abgedeckt ist. Nun wird der so gebildete Datenträgerkassettenstapel (6) durch Einwirkung einer äußeren, den Rückstellkräften der Federn (502) entgegengesetzt wirkenden Kraft zusammengepreßt, so dass alle oberen Spulenflansche (302) der Bandspulen (30) in der oberen Anschlagposition (B) gegen die obere Gehäusehälfte (101) gedrückt werden.
Der unter Spannung stehende Datenspeicherkassettenstapel (6) wird durch Anbringen einer Umhüllung (5) stabilisiert und anschließend aus der Stapelhilfe (nicht dargestellt) entnommen. Der so gefertigte Datenspeicherkassettenstapel (6) ist nunmehr versandbereit und Beschädigung der Bandspulen (30) bzw. des bandförmigen Datenaufzeichnungsträgers (40) während des Transports werden vermieden.

Bei Entfernen der Umhüllung (5) wird die Einwirkung der äußeren Kraft aufgehoben und unter Einwirkung der Rückstellkräfte der Federn (502) kehren die Bandspulen (30) in ihre untere Anschlagposition (A) zurück, wobei die Transportsicherungselemente (3a, 3b, 3c, 3d ) selbsttätig aus den Zugangsöffnungen (103) gleiten und die Datenspeicherkassetten (1, 2) somit einsatzbereit sind.

Es versteht sich von selbst, dass der Datenspeicherkassettenstapel auch so aufgebaut werden kann, dass die erste Datenspeicherkassette mit in der axialer Richtung (Y) weisenden Zugangsöffnung (103) auf die ebene Deckplatte (4) aufgelegt ist.

Ein weiteres Verfahren zur Transportsicherung eines Datenspeicherkassettenstapels (7) ergibt sich, wenn die Kassetten entsprechend Fig. 7 angeordnet sind.
Der Stapel besteht aus mindestens zwei Datenspeicherkassetten (1), halb so vielen, in die kreisförmige Zugangsöffnung (103) eingelegten Transportsicherungselementen ((3x), 3y 3z)) die zu einem Doppelpack zusammengefügt sind und einer Umhüllung (5).
In eine erste Datenspeicherkassette (1) wird ein Transportsicherungselement ((3x, (3y, 3z)) eingelegt und eine zweite Datenspeicherkassette wird so auf die erste Datenspeicherkassette gelegt, dass die beiden kreisförmigen Zugangsöffnungen (103) der Gehäuseunterteile (102) einander zugewandt sind, und somit jeweils ein Transportsicherungselement ((3x), (3y, 3z)) die Bandspulen (30) von zwei Datenspeicherkassetten sichert. Dieser Doppelpack wird in einer Stapelhilfe (nicht dargestellt) abgelegt. Alle weiteren, den Stapel bildende Datenspeicherkassetten werden in der eben beschriebenen Weise zusammengefügt und alle so entstandenen Doppelpacks werden nun in der Stapelhilfe (nicht dargestellt) aufeinander gelegt. Da bei dieser Anordnung der Kassetten alle dem Innenraum (V) abgewandten äußeren Oberflächen (104) abgedeckt sind, ist die ebene Deckplatte (4) nicht mehr erforderlich. Analog dem zuvor beschriebenen Verfahren wird nun der Datenspeicherkassettenstapel (7) durch Einwirkung einer äußeren, den Rückstellkräften der Federn (502) entgegengesetzt wirkenden Kraft zusammengepreßt, so dass wiederum alle oberen Spulenflansche (302) der Bandspule (30) in der oberen Anschlagposition (B) gegen die obere Gehäusehälfte (101) gedrückt werden. Der unter Spannung stehende Datenspeicherkassettenstapel (7) wird durch Anbringen einer Umhüllung (5) stabilisiert und anschließend aus der Stapelhilfe (nicht dargestellt) entnommen. Der so gefertigte Datenspeicherkassettenstapel (7) ist nunmehr versandbereit und Beschädigung der Bandspulen (30) bzw. des bandförmigen Datenaufzeichnungsträgers (40) während des Transports werden vermieden.

Bei Entfernen der Umhüllung (5) wird die Einwirkung der äußeren Kraft aufgehoben und unter Einwirkung der Rückstellkräfte der Federn (502) kehren die Bandspulen (30) in ihre untere Anschlagposition (A) zurück, wobei die Transportsicherungselemente (3x, 3y, 3z ) selbsttätig aus den Zugangsöffnungen (103) gleiten und die Datenspeicherkassetten (1) somit einsatzbereit sind.
Die Verwendung der beschriebenen Transportsicherungselemente ist nicht auf Datenspeicherkassetten mit einer Bandspule beschränkt, sondern kann vorteilhaft auch bei Kassetten mit mehreren Bandspulen, wie beispielsweise Videokassetten, verwendet werden.

## Patentansprüche

1. Transportsicherungselement für eine Datenspeicherkassette, wobei die Datenspeicherkassette wenigstens besteht aus
- einem Kassettengehäuse, gebildet aus einer oberen Gehäusehälfte (101) mit Deckel und Seitenwänden und einer unteren Gehäusehälfte (102) mit Boden und Seitenwänden, wobei der Boden eine kreisförmige Zugangsöffnung (103) mit einem Durchmesser (d) enthält und die beiden Gehäusehälften (101, 102) miteinander lösbar oder unlösbar verbunden sind
- einer Spulenbremse, welche die Bandspule gegen Verdrehen sichert
- einer im Kassettengehäuse rotierbar gelagerten, einseitig federbelasteten Bandspule (30), bestehend aus unterem und oberen Spulenflansch (301, 302) und Nabe (303), wobei der Teil der Bandspulennabe (303), der in die Zugangsöffnung (103) ragt Mittel zur Koppelung der Bandspule mit der geräteseitigen Antriebsnabe aufweist, und mit darauf aufgewickeltem bandförmigem Datenaufzeichnungsträger (40), an dessen freiem Ende ein Bandführungselement (nicht dargestellt) angebracht ist und wobei die Bandspule (30) entgegen dem Andruck der Feder in axialer Richtung (Y) innerhalb des Innenraumes (V) des Kassettengehäuses beweglich ist und obere (B) und untere Anschlagposition (A) einnimmt,
**dadurch gekennzeichnet, dass**
das Transportsicherungselement (3a) scheibenförmig ist und einen Außendurchmesser (d4) aufweist, welcher geringfügig kleiner ist als der Durchmesser (d) der kreisförmigen Zugangsöffnung (103) in der unteren Gehäusehälfte (102) und wobei die Dicke (b₄) des Transportsicherungselements (3a) im wesentlichen gleich ist dem Abstand (b₀) der Stirnseite der durch die Zugangsöffnung (103) ragenden Bandspulennabe (303) in der oberen Anschlagposition (B) des Spulenflansches (302) der Spule (30) an der oberen Gehäusehälfte (101) im Zwischenraum (V) und der dem Zwischenraum abgewandten äußeren Oberfläche (104) der unteren Gehäusehälfte (102).

2. Transportsicherungselement für eine Datenspeicherkassette gemäß dem Oberbegriff des Anspruchs 1, wobei der Teil der Bandspulennabe (303), der in die Zugangsöffnung (103) ragt, einen Durchmesser (d₃) aufweist und wobei zwischen der äußeren Mantelfläche des in die Öffnung (103) ragenden Teils der Bandspulennabe (303) und der inneren Mantelfläche der Zugangsöffnung (103) eine ringförmige Ausnehmung (t) entsteht,
**dadurch gekennzeichnet, dass**
das Transportsicherungselement (3b) im wesentlichen hohlzylindrisch ist, wobei der Außendurchmesser (d₅) geringfügig kleiner ist als der Durchmesser (d) der kreisförmigen Zugangsöffnung (103) in der unteren Gehäusehälfte (102) und der Innendurchmesser (d₆) geringfügig größer ist als der Durchmesser (d₃) des unteren Spulenflansches (301) und wobei die Ringdicke (b₅) im wesentlichen gegeben ist durch den Abstand (b₁) der Stirnseite der durch die Zugangsöffnung (103) ragenden Bandspulennabe (303) in der oberen Anschlagposition (B) der Bandspule (30) an der oberen Gehäusehälfte (101) im Zwischenraum (V) und der dem Zwischenraum abgewandten äußeren Oberfläche (104) der unteren Gehäusehälfte (102).

3. Transportsicherungselement für eine Datenspeicherkassette gemäß dem Oberbegriff des Anspruchs 2, wobei der Teil der Bandspulennabe (303), der in die Zugangsöffnung (103) ragt, eine kreisförmige Ausnehnung oder einen kreisförmigen Durchbruch (305) mit dem Durchmesser (d₂) aufweist,
**dadurch gekennzeichnet, dass**
das im wesentlichen scheibenförmige Transportsicherungselement (3c) an der der Bandspulennabe (303) zugewandten Seite mit entsprechenden kreisförmig bzw. kreisringförmigen Erhebungen (31c, 32c) ausgestattet ist und wobei der Außendurchmesser (d₇) der am Rand befindlichen kreisringförmigen Erhebung (31c) geringfügig kleiner ist als der Durchmesser (d) der kreisförmigen Zugangsöffnung (103) in der unteren Gehäusehälfte (102) und der Innendurchmesser (d₈) geringfügig größer ist als der Durchmesser (d₃) der durch die Zugangsöffnung (103) ragenden Bandspulennabe (303) und wobei der Außendurchmesser (d₉) der in Richtung Spulennabenmitte befindlichen kreisringförmigen Erhebung (32c) geringfügig kleiner ist als der Durchmesser (d₂) der kreisförmigen Ausnehmung oder des kreisförmigen Durchbruchs (305) und wobei die Ringdicke (b₇) im wesentlichen gegeben ist durch den Abstand (b₂) der Stirnseite der durch die Zugangsöffnung (103) ragenden Bandspulennabe (303) in der oberen Anschlagposition (B) der Bandspule (30) an der oberen Gehäusehälfte (101) im Zwischenraum (V) und der dem Zwischenraum abgewandten äußeren Oberfläche (104) der unteren Gehäusehälfte (102).

4. Transportsicherungselement für einen Datenspeicherkassette gemäß Anspruch 3,
**dadurch gekennzeichnet, dass**
eine kreis- bzw. kreisringförmige Erhebung (32d) auf der einen Stirnfläche im Scheibenzentrum des im wesentlichen scheibenförmigen Transportsicherungselements (3d) angebracht ist und eine kreisringförmige Erhebung (31 d) auf der gegenüberliegenden Stirnfläche am Scheibenumfang.

5. Transportsicherungselement gemäß Anspruch 1, **dadurch gekennzeichnet, dass** die Höhe b₁₀ des Transportsicherungselements (3x) zweimal der Höhe b₄ des Transportsicherungselements (3a) entspricht.

6. Transportsicherungselement gemäß Anspruch 2, **dadurch gekennzeichnet, dass** die Höhe b₁₁ des Transportsicherungselements (3y) zweimal der Höhe b₅ des Transportsicherungselements (3b) entspricht.

7. Transportsicherungselement gemäß Anspruch 3, **dadurch gekennzeichnet, dass** die Höhe b₁₂ des Transportsicherungselements (3z) zweimal der Höhe b₇ des Transportsicherungselements (3c) entspricht und beide Stirnseiten des Transportsicherungselements (3z) die kreisringförmigen Erhebungen (31 c, 32c) aufweisen.

8. Datenspeicherkassettenstapel (6) mit Transportsicherungelementen gemäß einem der Ansprüche 1 bis 4, bestehend aus einer oder mehreren Datenspeicherkassetten (1, 2) und gleich vielen in die kreisförmigen Zugangsöffnungen (103) der unteren Gehäusehälfte (102) der Datenspeicherkassetten (1,2) einlegbaren Transportsicherungselementen (3a, 3b, 3c) sowie einer ebenen Deckplatte (4), die an der äußeren Oberfläche (104) der unteren Gehäusehälfte (102) einer endständigen Datenspeicherkassette (2) anliegt und einem den Stapel umhüllenden Medium (5).

9. Datenspeicherkassettenstapel (7) mit Transportsicherungelementen gemäß einem der Ansprüche 5 bis 7, bestehend aus mindestens zwei Datenspeicherkassetten (1) und halb so vielen in die kreisförmigen Zugangsöffnungen (103) der unteren Gehäusehälfte (102) der Datenspeicherkassetten (1) einlegbaren Transportsicherungselementen (3x, 3y, 3z) und einem den Stapel umhüllenden Medium (5), wobei jeweils zwei Datenspeicherkassetten (1) so übereinander gelegt sind, dass die im Gehäuseunterteil (102) angebrachten Zugangsöffnungen (103) einander zugewandt sind.

10. Verfahren zur Transportsicherung eines Datenspeicherkassettenstapels (6, 7) gemäß Anspruch 8 oder 9, **dadurch gekennzeichnet, dass** der Datenspeicherkassettenstapel (6, 7) durch Einwirkung einer äußeren, den Rückstellkräften der Federn (502) entgegengesetzt wirkenden Kraft zusammengepreßt wird, so dass während des Transports alle Spulenflansche (302) der Bandspulen (30) gegen die oberen Anschlagpositionen (B) an der oberen Gehäusehälfte (101) der Datenspeicherkassetten (1, 2) gepreßt werden, dieser Stapel mit einem Medium (5) umhüllt und so die Lage der Bandspulen (30) fixiert wird, und dass nach erfolgtem Transport bei Entfernung des Umhüllungsmediums (5), die Einwirkung der äußeren Kräfte aufgehoben wird, alle Bandspulen (30) in die untere Anschlagposition (A) zurückfedern, wobei alle Wickelteller (301) wieder in Kontakt mit den unteren Gehäusehälften (102) kommen und die Transportsicherungselemente (3a, 3b, 3c, 3x, 3y, 3z) selbsttätig aus den Zugangsöffnungen (103) gleiten.
